# EUROPEAN PATENT SPECIFICATION

(11) **EP 1 547 319 B1**
(45) Date of publication and mention of the grant of the patent: **08.09.2010**
(21) Application number: 03799219.5
(22) Date of filing: 01.07.2003
(51) Int. Cl.: H04L 12/28, H04L 12/56

(54) **ISOLATION OF HOSTS CONNECTED TO AN ACCESS NETWORK**
ISOLATION VON MIT EINEM ZUGANGSNETZWERK VERBUNDENEN HOSTS
ISOLEMENT D'HOTES CONNECTES A UN RESEAU D'ACCES

(30) Priority: 04.10.2002 US 415815 P
(43) Date of publication of application: 29.06.2005
(73) Proprietor: Telefonaktiebolaget LM Ericsson (publ), 164 83 Stockholm (SE)
(72) Inventor: RUNE, Johan, S-181 30 Lidingö (SE)
(74) Representative: Norin, Klas
(86) International application number: PCT/SE2003/001141
(87) International publication number: WO 2004/032426

(56) References cited:
- WO-A2-02/19056
- US-A1- 2002 052 972
- US-A1- 2002 071 418
- US-A1- 2002 080 800
- US-A1- 2002 131 411

## Description

### TECHNICAL FIELD OF THE INVENTION

This invention relates to a method and an arrangement in an access network for preventing hosts connected to the access network from communicating directly with each other.

### BACKGROUND OF THE INVENTION

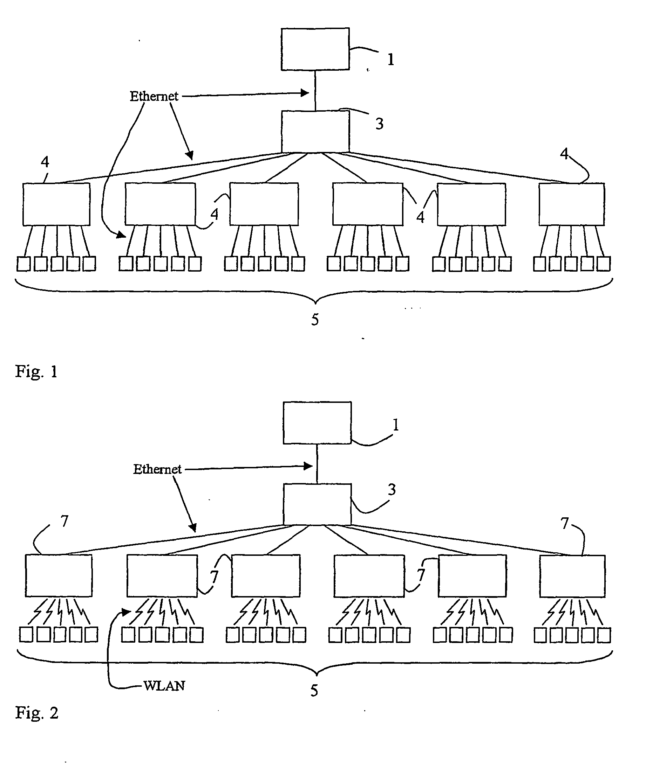

The invention is related to the field of Ethernet access networks. Although Ethernet and IEEE 802.3 are not identical, the term "Ethernet" is henceforth somewhat inappropriately used to denote either Ethernet or IEEE 802.3. The access network could be a plain Ethernet network or a combination of a fixed Ethernet network and a wireless part using the corresponding WLAN (Wireless LAN) technology IEEE 802.11 (most likely IEEE 802.1 1b). The main target for the invention is public access networks, but it could also be applied to corporate wireless access networks. A fixed all-Ethernet access network is illustrated in Figure 1 and a combined Ethernet and WLAN access network (i.e. a WLAN access network) is illustrated in Figure 2. The access network of Figure 1 comprises an access router 1 connected to a switch 3 which in turn is connected to six lower switches 4. Five hosts 5 are connected to each of the lower switches 4. All connections are here Ethernet connections. The access network in Figure 2 comprises an access router 1 connected to a switch 3 which in turn is connected to six access points, APs, 7. Five hosts 5 are connected wirelessly through WLAN to each of the APs. The connections between the access router 1, the switch 3 and the APs are Ethernet connections.

In the context of this document a host is defined as a device that can communicate using the IP protocol and either of or both of Ethernet and WLAN (IEEE 802.11), but that does not forward data (neither packets nor frames) from one node to another.

Typical examples of hosts are a PC with an Ethernet interface card or a laptop with a WLAN PCMCIA card, both of which having an operating system that includes an IP protocol stack.

In the context of this document an access network is defined as comprising one or more access routers and the nodes and connections providing connectivity between the access router(s) and one or more hosts, which are connected to the access network, wherein the connectivity is achieved without router traversals.

For example in Figure 1 and 2 all parts except the hosts belong to one and the same access network. It would also be possible that the access networks in Figure 1 and 2 comprise one further or even more access router(s) connected to the switch.

Recently more and more attention has been given to Ethernet as an access technology even in the public area. The simplicity and ubiquity of the technology lure operators with features such as well-proven easily configured broadband capabilities and equipment at economy of scale prices. The wireless extension to Ethernet, IEEE 802.11, commonly known as WLAN, has also taken off as a high-speed access complement to cellular networks (mostly in its IEEE 802.1 1b flavour) in the public sector. The term WLAN is subject to confusion, since it is used (by different people) to denote either IEEE 802.11 or HIPERLAN (either HIPERLAN or HIPERLAN/2). In this document the term WLAN always refers to IEEE 802.11. See also IEEE 802.11, "Wireless LAN Medium Access Control (MAC) and Physical Layer (PHY) Specification". The WLAN access networks could be operated by ISPs (sometimes called Wireless ISPs, WISPs), by cellular (GSM/GPRS/cdmaOne/3G) operators wishing to complement their cellular access at hotspots, or even by very local entities such as hotels or shopping malls.

However, neither Ethernet nor IEEE 802.11 was designed for public access. They were both designed for corporate networks. Hence it is not surprising that some of the inherent properties of these technologies are not well-suited for public access. In a corporate network all users can be assumed to trust each other. This is very different from the situation in a public network, where the default assumption should be that each user trusts no other user. The broadcast/random access (CSMA/CD for Ethernet and CSMA/CA for WLAN) paradigm has the advantage of simplicity, but it is obvious that it should preferably be used in a trustful environment. The situation is the same with the ARP (Address Resolution Protocol) mechanism that is used to translate between IP addresses and MAC (hardware) addresses: its simplicity is ingenious, but it is wide open to malicious attacks in an untrusted environment. Also other mechanisms, such as broadcast router advertisements pose security risks in public environments.

The most obvious types of attacks that could be launched by malicious users are so-called re-direction attacks and man-in-the-middle attacks. A simple form of man-in-the-middle attack is based on false ARP replies. When an ARP request is broadcast in search of the MAC address of host A, host B, which is controlled by a malicious user, may reply with its own MAC address in place of host A. Subsequent IP packets will then be sent to host B instead of host A. Host B then forwards the packets to host A and if host A sends any packets in response, host B will forward them to the originally intended receiver. This way, by placing himself in the middle of the communication path, the malicious user of host B is able to monitor the communication of host A without the user of host A knowing about it. The user of host A will probably severely disapprove of this arrangement.

An example of a re-direction attack is a so-called "false router" attack. To launch a false router attack the malicious user attaches his computer (host B) to the network and starts sending false router advertisements. Another user who subsequently attaches to the network (using host A) may receive the false router advertisements and send his login credentials to host B instead of the legitimate access router. The malicious user may use such an arrangement e.g. to crack a secret authentication key by sending lots of authentication challenges to host A or to simply "borrow" usernames and passwords that may be sent in cleartext. To make even more use of the trick the malicious user of host B may choose to forward the login credentials to the legitimate router and intercept and forward the replies from the router. This turns the re-direction attack into a man-in-the-middle attack.

Attacks such as the ones described above rely on the possibility to communicate directly between two hosts attached to the same access network. That is, they rely on an unrestricted broadcast access network that allows host-to-host communication that is not controlled by the access router. Such unrestricted local host-to-host communication also poses another problem in the public environment: it opens up for uncharged and/or unauthorised traffic. Since this kind of local traffic does not pass through the access router, no form of volume based charging can be applied, flat rate is the only option. Furthermore, if an authentication (and authorisation) procedure is used between the clients and the access router (which is more or less a requirement in public WLAN access networks), this procedure is easily circumvented for local traffic, thereby allowing illegitimate users to communicate in the access network.

The bottom line is that direct host-to-host communication should not be allowed and the access router should be in control of all traffic originating and/or terminating in the access network. Otherwise security is compromised, flexible charging schemes are hampered and the (wireless) access network is open for illegitimate users. What is needed is a mechanism to isolate the users from each other (even though they are attached to a network that employs an inherent broadcast technology) and to enable the access router to be in control of the intra-access network traffic.

### THE VIRTUAL LAN (VLAN) CONCEPT

Since the inventive solution outlined in this document makes efficient use of virtual LAN (VLAN) mechanisms, a general understanding of the VLAN concept facilitates the understanding of the inventive solution.

The VLAN concept is specified in IEEE 802.1 Q "Virtual Bridged Local Area Networks". A VLAN is a logical restriction of the physical broadcast segment defined by a switched Ethernet LAN infrastructure. There may be several, possibly overlapping, VLANs residing on the same physical broadcast segment, but despite the physical characteristics of the underlying medium, frames do not flow from one VLAN to another. Inter-VLAN communication has to be handled through IP forwarding.

### Frame Tagging

In order to determine what VLAN a frame belongs to a "tag header" is added to the regular Ethernet frame header. The tag header contains a VLAN identity in the form of a 12-bit VLAN tag. The VLAN tag is used by a switch in the LAN to determine through which port(s) a certain frame is to be forwarded. On top of this mechanism the regular MAC address learning process in the switch may restrict the forwarding to a single port (or even no port at all if the destination host is know to be located on the LAN segment from which the frame arrived). Although the standard does not exclude VLAN aware hosts, such capabilities do not exist (or are at least very rare) in existing host computers. Hence, VLAN tagged frames are typically only used between switches and the tag header is stripped off before a frame is sent to its destination host. Likewise, a host transmits frames without tag headers and the tag headers are added by the first switch in the path when appropriate.

### VLAN Classification

How does the switch know what VLAN tag to add to a received untagged frame? This VLAN classification is governed by the ingress rules defined in the switch. These ingress rules could theoretically be defined in almost any way, but in practice only a few principles are used. IEEE 802.1Q gives a few examples of VLAN classification:
- port-based,
- protocol-based,
- subnet-based, and
- MAC address-based VLAN classification.

The simple rule of a port-based classification is that all untagged frames received at a certain port are classified as belonging to a certain VLAN. Protocol-based classification on the other hand selects the VLAN tag based on the next layer protocol (e.g. IP or IPX) that is carried in the frame. When subnet-based classification is used, the switch selects the VLAN tag on the basis of IP subnet addressing characteristics of the received frames. With MAC address-based classification a set of MAC addresses is associated with a certain VLAN identity. The VLAN tag is then selected based on the source MAC address of a received untagged frame. When MAC address-based classification is used a host can announce its membership in a certain VLAN using a protocol defined in IEEE 802.1Q.

In real life port-based VLANs is the only classification principle that has been ubiquitously deployed. Port-based VLANs are also what the inventive solution is based on and henceforth the term "VLAN" will always refer to a port-based VLAN.

A port-based VLAN is completely defined in a switch by the following attributes:
- the VLAN identity,
- the member set,
- the untagged set, and
- the allocation of port VLAN identifiers (PVIDs).

The VLAN identity is the identity of the VLAN, which is identical to the VLAN tag that is included in the tag header of frames belonging to the VLAN. The member set is the set of ports (in the concerned switch) through which frames tagged with the identity of the concerned VLAN may be forwarded. The untagged set is a subset of the member set, namely those of the ports in the member set through which frames belonging to the VLAN should be forwarded untagged. The PVID parameter of a port is what dictates what VLAN tag that should be added to an incoming untagged frame when port-based classification is used. Hence, each port in a switch employing port-based VLAN classification should have one and only one PVID associated with it.

As stated above, these attributes together completely define a VLAN in a switch. By manipulating the attributes the VLAN can be given different properties. However, even though these are the attributes described in the standard, a switch manufacturer may choose other attributes to achieve the same purpose. It is also common that a switch manufacturer raises the level of abstraction in the user interface, so that individual attributes are not visible. This may simplify the VLAN configuration procedure for an administrator, but it also reduces the flexibility in which the attributes can be manipulated.

It should be pointed out that a VLAN definition is strictly local to a switch. To make a VLAN extend across multiple switches an administrator must make sure that the VLAN identities used when configuring the individual switches match each other in the desired way. If successfully configured, interconnected switches can then handle specific VLAN tags in a coordinated and consistent manner.

### Independent and Shared VLANs

Another distinguishing property between different VLANs in a switch is whether they are independent VLANs or shared VLANs. Independent VLANs, which are the most commonly used type, use a separate MAC address learning database for each VLAN in the switch (at least conceptually, however, the databases may still be implemented as a single database). This means that the MAC address learning processes in independent VLANs are isolated from each other.

Shared VLANs, on the other hand, use a common MAC address learning databases (at least conceptually). A consequence of this is that a MAC address that is learnt in one shared VLAN is automatically learnt also in all other shared VLANs using the same MAC address learning database.

### RELATED ART

The known state of the art solutions all utilise virtual LANs (VLANs), which are specified in IEEE 802.1Q, in various ways to isolate the hosts from each other.

A common feature is that each host gets its own VLAN, in which only the host itself and the access router are members. In its basic form, this is all there is in this solution. Each VLAN is a separate IP subnet. The access router is a member of all the VLANs and performs regular IP routing between the IP subnets represented by the VLANs. A consequence of such configuration is that the access router has to have one IP address for each VLAN (which may be many). (A block of IP addresses has to be allocated to each VLAN, but since we assume that there is only one host in each VLAN, this block of IP addresses may contain as little as two addresses (i.e. a subnet mask length of 31).) IP addresses are a scarce resource and consequently it is a disadvantage that a large number of IP addresses have to be allocated to the access router. In addition, the administrative work involved in configuring all these IP addresses and subnet masks may be substantial. Yet a disadvantage is that it is not possible to reach all hosts simultaneously with a single broadcast message. Instead the access router has to generate and send a separate message in each VLAN (i.e. to each host).

A way to avoid having to allocate one IP address to the router for each VLAN (i.e. for each host connected to the access network) and one block of IP addresses to each VLAN is to use the VLAN aggregation feature, which is described in RFC 3069, "VLAN Aggregation for Efficient IP Address Allocation". The VLAN aggregation concept introduces the notion of sub-VLANs that belong to a super-VLAN. Each sub-VLAN remains a separate broadcast domain, but from an IP addressing point of view all sub-VLANs belonging to the same super-VLAN constitute a single IP subnet and use a common default gateway IP address. The subnet address, the subnet mask and the default gateway address are configured for the super-VLAN and then they are "inherited" by the sub-VLANs. The super-VLAN itself could be labelled as a "pseudo-VLAN" in the sense that it is not used for any traffic. That is, no frames are sent with the super-VLAN identity in the VLAN tag field. Hence, the super-VLAN is more or less a configuration trick. Since the sub-VLANs are separate broadcast domains, even though they are part of the same IP subnet, the super-VLAN router has to support the ARP mechanism of the hosts in order to enable inter-sub-VLAN communication. This "support" comes in the shape of a mechanism similar to proxy ARP (which is specified in RFC 925, "Multi-LAN Address Resolution"). This also includes forwarding of IP packets between the sub-VLANs.

Mapping the VLAN aggregation concept on an access network with a VLAN for each host simply means that all of the "host VLANs" become sub-VLANs, a super-VLAN is defined for configuration purposes and the access router becomes the super-VLAN router.

Although the IP address configuration is greatly simplified by the VLAN aggregation concept, the broadcast limitations still remain. That is, to reach all hosts with a subnet-wide broadcast message (which is a quite normal function), e.g. a router advertisement, the broadcast message has to be replicated in each sub-VLAN. This consumes processing resources as well as bandwidth in the access router.

At the time of writing the only available implementations of VLAN aggregation are in switches from Extreme Networks. These have the limitation that a switch in which sub-VLANs and a super-VLAN are defined also has to be the super-VLAN router (which is unfortunate). It is unclear whether this limitation is inherent in the concept or just a design choice.
Another solution that is related to the inventive solution proposed herein is the use of asymmetric VLANs as described in IEEE 802.1Q, annex B, section B.1.3. The purpose of this solution is not to isolate individual hosts connected to an access network (and neither is the original purpose of the VLAN aggregation feature), but to isolate hosts or groups of hosts on a LAN from each other, while still allowing access to a common resource, e.g. a server. Still, its similarities with the inventive solution motivates that it is mentioned as related art. In this solution each host or group of hosts gets its own port based VLAN for transmission of frames towards the server, while a common VLAN (i.e. common to all hosts) is used for transmission of frames in the server to host direction. How to enable controlled host-to-host communication is not mentioned and neither is the issue of IP address allocation, which is clearly a disadvantage from the access network perspective.

A problem that is common to all solutions that employ the "one VLAN per host" concept, which include all the above state of the art solutions, is that configuring and maintaining all these VLANs is a considerable administrative burden for the operator of the network. This is particularly obvious in a public Ethernet access network, where the number of hosts may be thousands.

Another problem that is common to all the state of the art solutions is that they cannot be scaled to very large access networks with tens of thousands of hosts. The reason is that the VLAN identities are a scarce resource. The 12 bits of the VLAN identifier limits the number of VLANs in the same physical broadcast domain to 4096.

Yet a deficiency of the "one VLAN per host" concept is that it cannot be employed in a WLAN access network. The reason is that it requires that each host have its own dedicated port on the switch to which it is attached. This is not the case in a WLAN access network, since each access point handles an almost arbitrary number of hosts simultaneously.

### SUMMARY OF THE INVENTION

An object of the invention is to provide an access network where hosts are isolated from each other but are able to communicate in a controlled way and where the above described problems with related art are solved.

This object is achieved in a method in an access network, where the access network comprises an access router and one or more switches wherein hosts are in communication contact with said access router via said switches. The method comprises the steps of defining Virtual Local Area Networks, VLANs, in the switches such that traffic arriving in the switches from said hosts is forced to the access router and defining in the switches one downlink VLAN being asymmetrical and carrying downlink traffic from the access router to said hosts. Said downlink VLAN is common to said hosts connected to the access network. The method comprises the further steps of configuring the VLANs such that said hosts connected to the access network belong to the same IP subnet and configuring the access router to perform intra-subnet routing and to be an Address Resolution Protocol proxy. This method is defined in claim 1.

The object is also achieved in an arrangement in said access network. Said arrangement comprises an access router, one or more switches connected to the access router and one or more hosts being in communication contact with said access router through said switches. The switches and the access router are configured as described above for the method. This arrangement is defined in claim 13.

Hereby a method and an arrangement are achieved where all the traffic is forced via the access router and hosts connected to the access network are not able to communicate directly with each other. Furthermore only one VLAN is used for the downlink traffic from the access router and therefore broadcasting of traffic from the access router is performed effectively. Moreover, since the hosts belong to the same IP subnet, IP addresses are saved, because the access router only needs one IP address associated with its interface in the access network instead of one IP address for each of a multitude of VLANs, each VLAN constituting one IP subnet. The access router performs intra-subnet routing which means that it forwards and redirects received traffic back into the own access network, which constitutes a single IP subnet. Furthermore the access router is an ARP proxy which means that the access router responds to ARP requests on behalf of the hosts connected to the access network of the access router.

In one embodiment the switches are configured to define one uplink VLAN being asymmetrical and carrying uplink traffic from the hosts to the access router, said uplink VLAN being common to said hosts connected to the access network. Hereby the VLAN configuration is very simple, since only two VLANs are used and since the same configuration (in principle) is repeated in every switch in the access network. Furthermore this embodiment is applicable for both fixed access networks and WLAN access networks.

In another embodiment of the invention the switches in a fixed access network are configured to define one uplink VLAN for each of said hosts or for each of one or more groups of said hosts, said uplink VLANs being used for only uplink traffic from said hosts to the access router. Hereby the access router can use the VLAN tag of a received frame as an identification of the subscriber responsible for sending the frame.

In one variant of the invention the switches in a fixed access network are configured to define one uplink VLAN for each of said hosts or for each of one or more groups of said hosts, said uplink VLANs being used for uplink traffic from said hosts to the access router and further defining said uplink VLANs to also transfer downlink unicast traffic from the access router to the hosts. Hereby it is ensured that a downlink unicast frame reaches only its intended destination host.

In a WLAN access network the switches can be configured to define one uplink VLAN for each Access Point, AP, or for each of one or more groups of APs, said uplink VLANs being used for uplink traffic from the APs to the access router. Hereby the access router can be provided with implicit position information through the VLAN tag about the sending host.

In a WLAN access network the Access Points, APs are suitably configured to prevent hosts connected to the same AP from communicating directly with each other through the AP by extending the downlink VLAN and the uplink VLAN to incorporate the APs or by utilising the inherent configuration abilities of the AP.

Suitably the frames sent from the hosts are provided with VLAN tags in the switches and the access router is configured to be VLAN aware. Hereby positioning information can be achieved as described above in a WLAN access network and the VLAN tag can be used as an identification of the subscriber sending the frame in the fixed access network.

Preferably the VLANs are configured as shared VLANs. Hereby the VLANs use a common MAC address learning database, i.e. when the location of a MAC address (in terms of which switch port it is attached to) is learnt in one VLAN, it is automatically learnt in all other VLANs sharing the same MAC address learning database too.

The access router can retrieve address mapping information from the hosts either during the user authentication procedure or during the IP allocation procedure. Hereby the access router can work as an ARP proxy.

The access network can comprise more than one access router.

### BRIEF DESCRIPTION OF THE DRAWINGS

Figure 1 is a typical (simplified) architecture of a fixed Ethernet access network.
Figure 2 is a typical (simplified) architecture of a WLAN access network.
Figures 3 a and 3b are conceptual illustrations of two asymmetric VLANs, one for uplink traffic and one for downlink traffic, in a fixed Ethernet access network.
Figures 4a and 4b are conceptual illustrations of two common asymmetric VLANs, one for uplink traffic and one for downlink traffic, in a WLAN access network.
Figure 5 shows the VLAN parameter definitions that are needed in a switch in order to achieve two common asymmetric VLANs.
Figure 6 is an illustration of how host-to-host communication between hosts associated with the same AP is prevented by extending the VLAN configuration to the AP.
Figure 7 shows the VLAN parameter definitions needed to achieve two common asymmetric VLANs in a fixed or WLAN access network with three switches in a tree structure.
Figures 8a, 8b and 8c are conceptual illustrations of multiple asymmetric VLANs in a WLAN access network, where there is one uplink VLAN for each AP (and the hosts associated with the AP) and a common downlink VLAN for all hosts (and APs).
Figure 9 shows the VLAN parameter definitions that are needed in a switch in order to achieve the multiple asymmetric VLANs in a WLAN access network with tagged or untagged uplink frames sent from the switch to the access router.

### DETAILED DESCRIPTION OF EMBODIMENTS

There are basically two variants of the solution. Both are based on the asymmetric VLAN concept to provide isolation of hosts. In addition, ways to provide controlled host-to-host communication in the access network via the access router are described. In both variants the access router and all the hosts belong to the same single IP subnet.

### First embodiment: two asymmetric VLANs

In this variant only two asymmetric VLANs are used to isolate hosts from each other, irrespective of the number of hosts. This makes the VLAN configuration very simple and scalable.

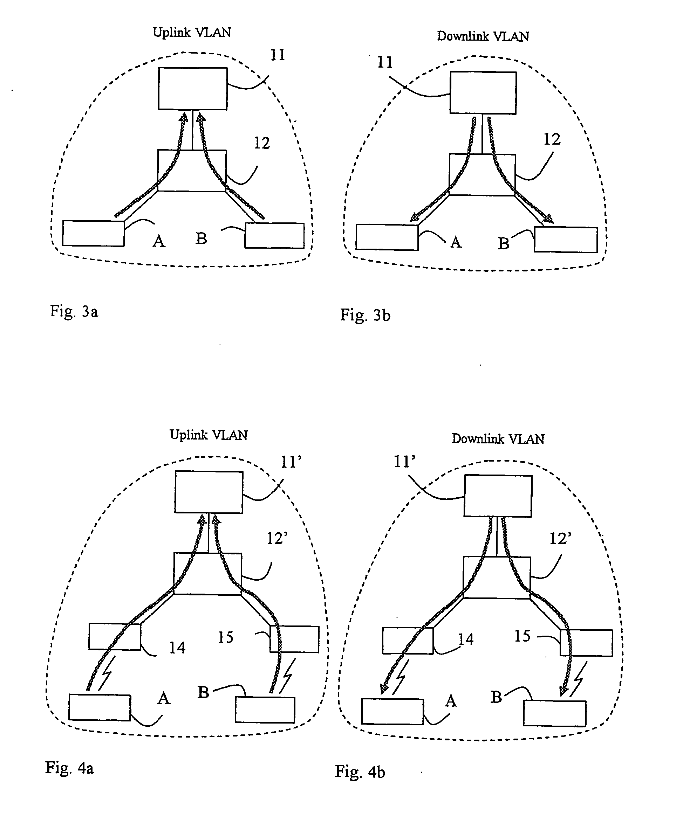

Of the two asymmetric VLANs one is used for uplink (host to access router) traffic and one is used for downlink (access router to host) traffic. Conceptually the two VLANs can be depicted as in Figures 3a and 3b and Figures 4a and 4b. Fig. 3a shows schematically the uplink VLAN in a fixed access network. One access router 11 is shown connected to a switch 12. The switch 12 is connected to two hosts, A and B. The arrows show the allowed traffic paths. In this uplink VLAN only uplink traffic from the hosts A, B to the access router 11 is allowed. Furthermore the uplink VLAN is defined such that all traffic received in the switch 12 from the hosts A, B has to be forwarded up to the access router 11, i.e. direct host to host communication is prevented. Fig. 3b shows schematically the downlink VLAN in the same access network as Fig. 3 a. The arrows show the allowed traffic paths.

Fig. 4a shows schematically the uplink VLAN in a WLAN access network. An access router 11' is shown connected to a switch 12'. The switch 12' is connected to two Access Points, APs, 14, 15. Host A and host B are communicating wirelessly with the APs 14, 15. Also here the arrows show the allowed traffic paths in the same way as described for figure 3a. Figure 4b is very similar to Figure 3b, i.e. the arrows show the allowed traffic paths in the downlink VLAN.

It should be noted that even though Figure 3 and Figure 4 illustrate the VLANs as including the hosts, the access router and the access points in the WLAN case, the hosts are assumed to be completely VLAN unaware, i.e. they handle only untagged Ethernet frames. Furthermore, the access points (APs) in the WLAN case are assumed to be VLAN unaware. The access router may or may not be VLAN aware. Probably not, in which case the actual VLANs are internal to the switch with no tagged frames sent in the access network. Still, the effective result of the switch internal VLANs are what is depicted in Figure 3 and Figure 4. The VLANs are port-based VLANs and the classification of frames are based on the VLAN parameters defined in the switch, as described above.

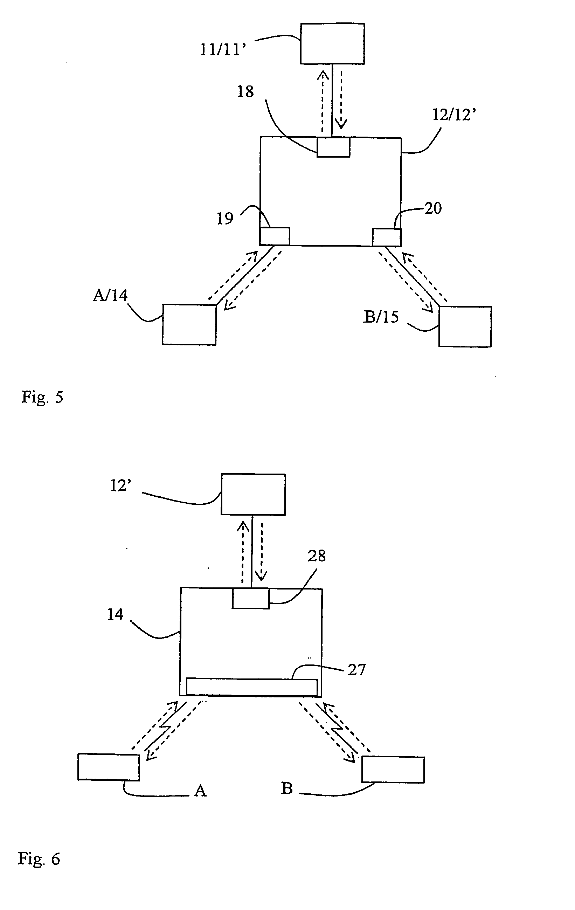

The parameter definitions that are needed in the switch in order to achieve the two above-described asymmetric VLANs are described with reference to Figure 5. The figure is essentially the same as figures 3 and 4. An access router 11/11' is connected to a switch 12/12'. The switch 12/12' comprises a first port 18, a second port 19 and a third port 20. The access router 11/11' is connected to the first port 18 of the switch 12/12'. Furthermore a first host A, or a first AP 14 in the WLAN case, is connected to the second port 19 of the switch 12/12' and a second host B, or a second AP 15, is connected to the third port 20 of the switch 12/12'. In this embodiment of the invention a first VLAN, VLAN 1, is assigned to all traffic arriving in the second and third ports 19, 20 of the switch 12/12', i.e. the PVID of the second and third ports 19, 20 is VLAN 1. The PVID of the first port 18 is instead VLAN 2, i.e. all untagged traffic received in the first port 18 of the switch 12/12' is assigned to a second VLAN, VLAN 2. Furthermore the member sets for the two VLANS are: VLAN 1: the first port 18 and VLAN 2: the second and third ports 19, 20. The untagged sets are in this embodiment the same as the member sets, i.e. all traffic is sent untagged from the switch 12/12'.

In more general terms the parameter definitions of Figure 5 means that an uplink frame (unicast or broadcast) that is received by the switch 12/12' (via an AP in the WLAN case) can exit the switch 12/12' only through the port 18 towards the access router 11/11'. The reason is that the received untagged frame is classified as belonging to the uplink VLAN, VLAN 1, (as indicated by the PVID parameter of the receiving port) and the only member port in the uplink VLAN (i.e. the only port through which uplink VLAN frames may be forwarded) is the port 18 towards the access router 11/11'.

For frames arriving to the switch 12/12' from the access router 11/11' the situation is somewhat different. The frame is automatically classified as belonging to the downlink VLAN, VLAN 2, but the port (or ports) through which the frame should be forwarded is not necessarily unambiguous. If the frame is a broadcast frame, it will be forwarded through all the member ports, i.e. all ports except the port 18 towards the access router. If the frame is a unicast frame, the switch 12/12' will consult its MAC address learning database in order to determine which port to forward the frame through. If the destination MAC address of the frame is not found in the MAC address learning database, the frame is flooded through all the member ports 19, 20, as if it were a broadcast frame.

An uplink frame received from a host (via an AP in the WLAN case) is always untagged. The frames between the switch 12/12' and the access router 11/11' (in either direction) may be either tagged or untagged, since the access router 11/11' may or may not be VLAN aware. Since the VLAN tags would not provide any useful information in this case, the simplest choice is to use untagged frames also between the switch 12/12' and the access router 11/11' (in both directions).

In order for this configuration to work as intended, the two asymmetric VLANs have to be shared VLANs. The reason is that the MAC address learning database that is needed for efficient handling of downlink frames in the downlink VLAN is dependent on the MAC address learning process of the uplink VLAN. This is because frames carrying host MAC addresses as source addresses are transmitted only in the uplink VLAN.

In the WLAN case the described VLAN configuration prevents direct communication between hosts associated with different APs, but it does not prevent communication (via the AP) between hosts associated with the same AP. Hence, in the WLAN case, the VLAN configuration should be complemented with mechanisms preventing host-to-host communication between hosts associated with the same AP. One way to achieve this would be to extend the asymmetric VLAN configuration to the APs. This is shown in figure 6. A switch 12' is shown connected to an AP 14. The AP 14 has a first port 27 to which two hosts, A and B are connected wirelessly and a second port 28 to which the switch 12' is connected. The member set of a first VLAN, VLAN 1, is the second port 28 and the PVID of the first port 27 is VLAN 1, i.e. all traffic received in the first port 27 is given PVID VLAN 1 and is therefore forwarded to the second port 28. Hereby all traffic is forced up to the switch and from there further forced to the access router and the hosts, A and B are prevented from communicating directly with each other. Furthermore the member set of a second VLAN, VLAN 2, is the first port 27 and the PVID of the second port 28 is VLAN 2, i.e. all traffic received in the second port 28 is given PVID VLAN 2 and is therefore forwarded to the first port 27 which is the only member port in VLAN 2.

However, WLAN APs can not be assumed to be VLAN aware (i.e. that they can handle VLAN tagged frames). Another way is to use the inherent configuration abilities of the AP to prevent host-to-host communication via the AP.

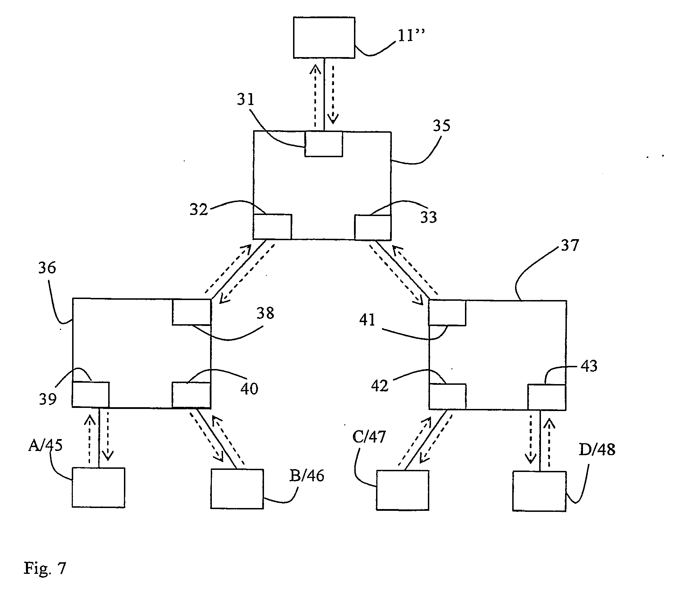

For simplicity of explanation the configuration example used so far has been a very simple access network including only a single switch. However, the principle of using two asymmetric VLANs, one for uplink traffic and one for downlink traffic, can easily be extended to access networks with a tree structure of multiple switches. The same VLAN configuration and parameter definition is simply reused in each switch. The switches do not even have to use tagged frames between themselves. In Figure 7 the same principle is illustrated for an access network using three switches in a tree structure. One access router 11 " is shown connected to a first port 31 in a first switch 35. A second switch 36 is connected to a second port 32 of the first switch 35. The second switch 36 comprises a first, a second and a third port 38, 39 and 40 and it is connected to the first switch 35 through its first port 38. A third switch 37 is connected to a third port 33 of the first switch 35. The third switch 37 comprises a first, a second and a third port 41, 42 and 43 and is connected to the first switch 35 through its first port 41. A host A (or a first AP 45 in the WLAN case) is connected to the second port 39 of the second switch 36, a host B (or a second AP 46) is connected to the third port 40 of the second switch 36, a host C (or a third AP 47) is connected to the second port 42 of the third switch 37 and a host D (or a fourth AP 48) is connected to the third port 43 of the third switch 37. The PVID for all second and third ports 32, 33, 39, 40, 42, 43 is VLAN 1 and the PVID for all first ports 31, 38, 41 is VLAN 2. Furthermore the member sets for VLAN 1 is the first port and the member set for VLAN 2 is the second and third ports. Hereby all traffic received in for example the second port 39 of the second switch 36 is given PVID VLAN 1 and will thus be forwarded through the first port 38 of the second switch 36 since the only member port in VLAN 1 is the first port. When sent from the first port 38 of the second switch 36 the traffic is then received in the second port 32 of the first switch 35. Also here the traffic is given the PVID VLAN 1 and the traffic will be forwarded through the first port 31 of the first switch 35 to the access router. Hereby all traffic from the hosts A, B, C and D is forced to the access router 11" and direct communication is prevented. All the traffic is suitably sent untagged.

### Enabling Controlled Host-to-Host Communication

With the above-described VLAN configuration the normal intra-subnet direct host-to-host communication is prevented (which was the purpose). Only direct host-to-access router and access router-to-host communication is possible.

In an Ethernet LAN, which is a shared medium network, the intra-subnet IP communication is based on the ARP protocol, which in turn relies on the broadcast mechanism. Normally (without host-to-host preventing configuration), if host A wants to communicate with host B which is connected to the same access router, it would derive from the IP address of B that it is located on the same IP subnet. Hence, A would try to retrieve the MAC address of B by broadcasting an ARP request including the IP address of B. However, due to the host-to-host communication prevention mechanism, B would never receive the ARP request and consequently A would not be able to retrieve the MAC address of B. This deadlock has to be resolved.

The way to resolve it is to let the access router act as a modified ARP proxy agent for the connected hosts. (The word "modified" is used, because this ARP proxy function deviates from the one described in RFC 925, "Multi-LAN Address Resolution".) As an ARP proxy agent the access router responds to all ARP requests concerning hosts on its subnet. In the ARP reply the access router includes its own MAC address in the 'sender hardware address' field instead of the MAC address of the target host.

So if host A wants to send an IP packet to host B and first broadcasts an ARP request with the IP address of B in the 'target IP address' field, the access router then returns an ARP reply to A including the MAC address of the access router in the 'sender hardware address' field. When A subsequently sends the actual IP packet to B, it encapsulates it in an Ethernet (or IEEE 802.11) frame with the MAC address of the access router as the destination address. This frame, and consequently the encapsulated IP packet, will only be received by the access router. Hence, it is the responsibility of the access router to see to it that the IP packet reaches its intended destination, i.e. host B. That is, the access router has to forward the IP packet to host B based on the destination address of the IP packet.

Thus, a consequence of acting as an ARP proxy agent is that the access router also has to forward IP packets between hosts on its own subnet (i.e. the subnet of the access network), i.e. it has to perform a form of "intra-subnet routing".

When responding to an ARP request an ARP proxy agent has to know two things: it has to know that the target host is actually present on the subnet and it has to know (or at least be able to find out) the MAC address of the target host in order to be able to forward subsequent IP packets. In regular ARP proxying, as described in RFC 925, "Multi-LAN Address Resolution", the ARP proxy agent repeats a received ARP request on the LANs to which it is attached (except the LAN on which the ARP request was received) and does not reply to the ARP request until it has received an ARP reply from the actual target host.

When acting as a modified ARP proxy agent, the access router does not repeat a received ARP request. Instead it bases its decision to reply to the ARP request on reliable internal IP address to MAC address mapping information (other than the ARP cache). The internal IP address to MAC address mapping information may vary with the circumstances of the access network. In particular it may be different in a fixed access network and a WLAN access network.

### Provisioning and Use of Internal Address Mapping Information in a WLAN Access Network

In the WLAN case, where mobile users come and go, some kind of user authentication and establishment of a security association is mandatory. There also has to be a mechanism to detect when a host leaves the access network, e.g. explicit deregistration procedures and association timeouts. Hence, the access router will always know what hosts that are connected to the access network. The next step is to retrieve the address mapping information.

During the user authentication procedure the access router extracts the relevant address information from the message(s) from the concerned host and stores it in the ARP proxy entity (or in some other entity where it is accessible for the ARP proxy function). The access router can also use the IP allocation procedure to retrieve address mapping information. Exactly how the address information is obtained depends on the address allocation methods that are used and on whether the user authentication is performed on the link level, before the IP address is allocated, or above the IP layer, after the IP address has been allocated.

If the user authentication is performed after the IP address is allocated, the access router extracts and stores both the MAC address and the IP address, which is all that is needed.

If the user authentication is performed before the IP address is allocated, the access router stores only the MAC address of the concerned host. The access router then has to complement the stored MAC address with the IP address when the IP address is allocated. This procedure depends on the IP address allocation method that is used. There are a number of possibilities:
- The IP address may be allocated using DHCP (Dynamic Host Configuration Protocol). In this scenario (which is the most likely) a DHCP server in the access router allocates the IP address. When doing this the DHCP server also stores the allocated IP address and the MAC address of the host to which it was allocated (this is normal DHCP server behaviour). The ARP proxy entity can then be allowed to access this information or, alternatively, it can be copied to the ARP proxy entity. An alternative is to simply intercept outgoing DHCP Offer messages and extract the relevant information.
- The IP address may be dynamically allocated by the Mobile IP Home Agent (HA) of the user. In this case the IP address is included in the Mobile IP registration reply, which is sent from the HA to the host. This message is relayed by the Mobile IP Foreign Agent (FA), which is located in the access router. Hence, the FA can extract the IP address and make it available to other entities in the access router. An alternative is to simply intercept outgoing Mobile IP registration reply messages and extract the relevant information. Since the IP address allocated by the HA of the host will appear to belong to another IP subnet than the access network, no other hosts connected to the access network will send ARP requests targeted for the concerned host. Hence, the ARP proxy agent will never have to respond on behalf of this host. However, the address mapping information may still be useful in order to eliminate an ARP request when the access router is to send an IP packet (forwarded or with the access router as the source) to the concerned host.

- The host (using Mobile IP) may have a fixed IP address allocated by its home network. In this case the IP address will be included in the Mobile IP registration request that is sent from the host to the HA. This message is relayed by the FA, which then can extract the IP address and make it available to the ARP proxy entity. An alternative is to simply intercept incoming or outgoing Mobile IP registration request messages and extract the relevant information. Since the IP address allocated by the home network of the host will appear to belong to another IP subnet than the access network, no other hosts connected to the access network will send ARP requests targeted for the concerned host. Hence, the ARP proxy agent will never have to respond on behalf of this host. However, the address mapping information may still be useful in order to eliminate an ARP request when the access router is to send an IP packet (forwarded or with the access router as the source) to the concerned host.
- The IP address may be allocated in a PPPoE (Point to Point Protocol over Ethernet) session. In this case the IP address is either allocated locally, by an internal entity in the access router, or remotely, e.g. by a RADIUS (Remote Authentication Dial In User Service) server in the home network of the user, e.g. a corporate network. In the remote allocation case the IP address is received from the remote entity and stored in the access router before it is forwarded to the host. Hence, both local and remote allocation allow the access router to make the IP address available to the ARP proxy entity and/or other entities in the access router. If the IP address is remotely allocated by a server in another network, the IP address will appear to belong to another IP subnet than the access network. Thus, in such case no other hosts connected to the access network will send ARP requests targeted for the concerned host. Consequently the ARP proxy agent will never have to respond on behalf of this host. However, the address mapping information may still be useful in order to eliminate an ARP request when the access router is to send an IP packet (forwarded or with the access router as the source) to the concerned host.

Irrespective of whether the IP address allocation occurs before or after the user authentication, the allocation may be time limited and a new or the same IP address may have to be reallocated after a certain time. This will certainly happen when DHCP is used and may also happen when Mobile IP is used to allocate the IP address. When this happens the new IP address has to be made available to the ARP proxy entity, using the same mechanism as during the original address allocation.

We can now conclude that when the access router receives from a host A in the WLAN access network an ARP request including the IP address of another host B in the WLAN access network in the 'target protocol address' field, the situation can be safely handled. The ARP proxy entity in the access router consults the relevant internal records and determines that the target host is present in the WLAN access network. At the same time it will retrieve the MAC address of the target host and then an ARP reply can be built and returned to host A with the MAC address of the router in the 'sender hardware address' field. When host A subsequently sends an IP packet destined for host B it will be encapsulated in a frame with the MAC address of the access router as the destination address. The access router receives this packet, determines that it is to be forwarded to a host connected to its own access network, looks up the MAC address of host B in the relevant internal records (thereby avoiding an ARP request again) and sends the IP packet into the access network encapsulated in an Ethernet frame with the MAC address of host B as the destination address. The VLAN configuration and the MAC address learning database(s) of the switch(es) in the access network will then ensure that the packet eventually reaches host B.

### Provisioning and Use of Internal Address Mapping Information in a Fixed Access Network

The situation in a fixed access network is different from that of a WLAN access network in that the users are not mobile. (Fixed access networks with mobile users are indeed conceivable, but in such case, for the purpose of this document the situation turns into the same as described above for a WLAN access network. Hence this special case needs no further elaboration and in the remainder of this section the users are assumed to be non-mobile.) Another difference is that there is no radio interface, all connections are wires (copper, coax, or fibre), which are harder to eavesdrop.

The absence of user mobility and radio interface implies:
- The need for a security relation between the user and the access router is less crucial. Especially so if flat rate is used as the charging principle for the subscription. Hence, the access network may choose not to employ user authentication and may choose not to keep track of what hosts that are connected.
- A user may have a permanent IP address allocated from the access network operator at subscription time. In such case the IP address allocation procedure can not be used to obtain IP address to MAC address mapping information.

Despite the above implications, the access router *may* still have a security relation (e.g. represented by user authentication and possibly subsequent encryption) with each user and *may* keep track of the currently logged on hosts. This is quite common and it is a prerequisite for certain accounting features. Likewise, the IP addresses *may* (even most likely) still be dynamically allocated.

If the access router does employ user authentication and does keep track of the connected hosts (e.g. via a login procedure and session supervision) and if the IP addresses are dynamically allocated, then the situation is the same as described above for a WLAN access network. Consequently the provisioning and use of the internal address mapping information is also the same in this case. Otherwise, different methods have to be used than in the WLAN access network.

If the access router keeps track of what hosts that are currently connected, e.g. via user authentication and session supervision mechanisms (like login, logout, and session timeout mechanisms), but the IP addresses are permanently allocated, then the problem to deal with for the access router is how to obtain the IP address to MAC. address mapping information. The best opportunity to do this is during the user authentication, or login, procedure. During this procedure the access router may extract the source IP address and the source MAC address from the messages that are received from the concerned host. This address mapping information is then stored in the access router, e.g. in the ARP proxy entity. The stored address mapping information can then be used by the ARP proxy entity and when IP packets are sent from the access router (either forwarded or with the access router as the source) to the concerned host.

If the IP addresses are dynamically allocated, but the access router does not keep track of what hosts that are currently connected, then the problem is not the address mapping information (which can be obtained during the IP address allocation procedure as previously described), but to know when to respond to an ARP request concerning a particular host and when to forward a packet destined for a certain host. For orthodox ARP proxy behaviour the access router has to know that the concerned host is currently connected to the access network before an ARP reply is sent in response to an ARP request. Since no reliable information is available in the access router (the address mapping information is normally too long-lived to be considered reliable in this situation), the access router has to somehow "probe" the access network to see if the concerned host is present. The easiest way to do this is to use the ARP mechanism. That is, first the access router consults its ARP cache and if the concerned host is found in the cache the access router concludes that the host is present in the access network and an ARP reply is sent. Otherwise the access router has to send a regular ARP request to find out whether the host is present or not. The ARP mechanism is used also when the access router is to send (either forward or with the access router as the source) an IP packet to a host connected to the access network.

The access router also has the alternative not to take on the responsibility of finding out whether a concerned host is present. Unless the address mapping information has timed out, the access router would then send ARP replies on behalf of a host as well as forward packets to the concerned host, without first finding out whether the host is currently connected to the access network or not. It would then be up to the higher protocol layers (above the IP layer) in the host trying to communicate with the concerned host to detect when the concerned host is not present. This is an ugly but possible alternative.

If the IP addresses are permanently allocated and the access router does not keep track of what hosts that are currently connected to the access network, then the access router has both the above-described problems. The solution to both problems is the ARP mechanism (i.e. checking the ARP cache and, if needed, sending ARP requests). The ARP mechanism is used both to check whether a certain host is present or not and to obtain IP address to MAC address mapping information. This applies both when a proxy ARP reply is to be generated and when an IP packet is to be sent to a concerned host. This more or less turns the ARP proxy entity in the access router into a regular ARP proxy agent, as described in RFC 925, "Multi-LAN Address Resolution".

With the first embodiment of the invention the scaling problem is eliminated, since only two VLANs are used. The VLAN configuration is very simple, since only two VLANs are used and since the same configuration (in principle) is repeated in every switch in the access network. Furthermore the access network can be a single IP subnet, due to the use of intra-subnet routing. This saves IP addresses and simplifies configuration of IP addresses and subnet masks. Further the broadcast replication problem in the access router is eliminated, since a single broadcast message from the access router will reach all hosts connected to the access network through the downlink VLAN. Another merit of the first embodiment is that the access router can be VLAN unaware. Furthermore the access router does not have to send ARP requests to find out the MAC addresses of the hosts connected to its access network (except in fixed access networks that do not keep track of what hosts that are currently connected). This saves bandwidth and reduces the delay for some packets. The solution is also applicable to both fixed access networks and WLAN access networks.

### Second embodiment: multiple asymmetric VLANs

### Isolation of Hosts

In this solution variant the principle for isolation of hosts differ somewhat between WLAN access networks and fixed access networks.

### Isolation of Hosts connected to WLAN Access Networks

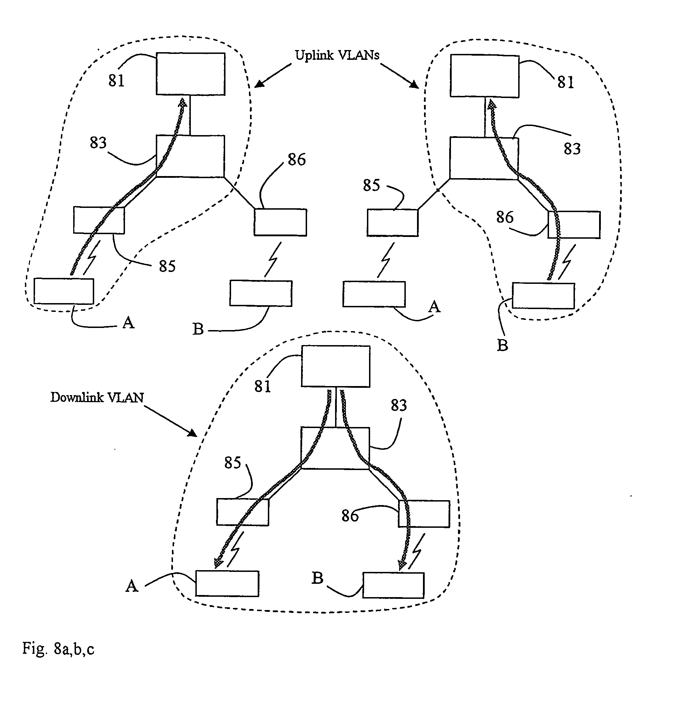

Instead of using a single asymmetric VLAN for uplink traffic, each AP has a dedicated VLAN for uplink traffic in this solution variant for WLAN access networks. The result is that the uplink traffic from all the hosts associated with a certain AP is carried through the VLAN dedicated to the AP. A single asymmetric VLAN is used for all downlink traffic. Having a dedicated VLAN for each AP should not cause any scaling problems, since it is foreseen that the number of APs in an access network will be far less than 4096. Conceptually the VLANs can be depicted as in Figures 8a, b and c. An access network comprising one access router 81, one switch 83 connected to the access router 81, a first and a second AP 85, 86 connected to the switch 83 and hosts A and B is shown as an example. Of course there could be more switches, APs and hosts in the access network. As will be described below there could actually also be more than one access router in the access network. The arrow in Figure 8a illustrates a first uplink VLAN, VLAN 1, the arrow in Figure 8b illustrates a second uplink VLAN, VLAN 2 and the two arrows in Figure 8c illustrates a downlink VLAN, VLAN 3. Hereby each AP has its own uplink VLAN but they all share a common downlink VLAN.

It should be noted that even though Figure 8 illustrates the VLANs as including the hosts, the APs, and the access router, the hosts and the APs are assumed to be completely VLAN unaware, i.e. they handle only untagged Ethernet frames. The access router may or may not be VLAN aware. As will be explained below it may be advantageous to let it be VLAN aware. If the access router is VLAN unaware, the VLANs are completely switch internal. Still, the effective result of the switch internal VLANs are what is depicted in Figure 8. The VLANs are port-based VLANs and the classification of frames are based on the VLAN parameters defined in the switch, as described above. As in the first embodiment the VLANs have to be shared VLANs.

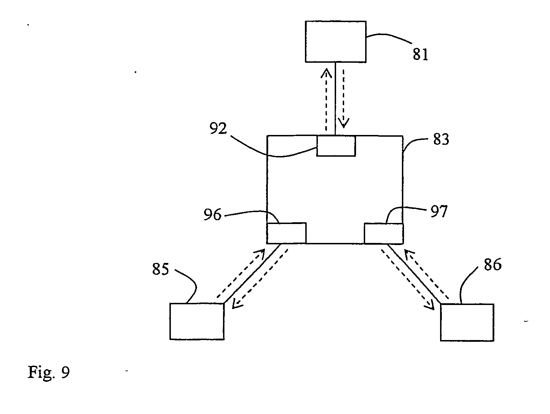

The parameter definitions that are needed in the switch in order to achieve the above-described asymmetric VLANs are described in relation to Figure 9. An access router 81 connected to a first port 92 in a switch 83 is shown. A first and a second AP 85, 86 are also shown connected to a second and a third port 96, 97 of the switch 83 respectively. The member sets for the three different VLANs are: VLAN 1: first port 92, VLAN 2: first port 92, VLAN 3: second and third ports 96, 97. In the case where the frames should be sent tagged from the switch to the access router the untagged sets are: VLAN 1: - , VLAN 2: - , VLAN 3: second and third ports. The PVID for the second port 96 is VLAN 1, the PVID for the third port 97 is VLAN 2 and the PVID for the first port 92 is VLAN 3. This means that all traffic received in for example the second port 96 of the switch 83 is classified as belonging to VLAN 1. Since the only member port of VLAN 1 is the first port 92, the traffic is forwarded to the first port 92. VLAN 1 has no members in the untagged set and therefore the traffic is tagged before leaving the first port 92.

In the case where the frames should be sent untagged from the switch 83 to the access router 81, the untagged sets should be: VLAN 1: first port 92, VLAN 2: first port 92, VLAN 3: second and third ports 96, 97. Traffic received in for example the third port 97 of the switch 83 is classified as belonging to VLAN 2 and therefore forwarded through the only member port of VLAN 2, i.e. the first port 92. Since the first port 92 also is a member port of VLAN 2 in the untagged set, the traffic is sent untagged to the access router 81.

From the parameter definitions of Figure 9 it can be seen that an uplink frame (unicast or broadcast) that is sent from a host via an AP and received by the switch 83 can exit the switch 83 only through the port 92 towards the access router 81. The reason is that the received untagged frame is classified as belonging to one of the uplink VLANs (as indicated by the PVID parameter of the receiving port), whose only member port is the port towards the access router 81.

A frame arriving from the access router 81 is automatically classified as belonging to the downlink VLAN (either because it is tagged with the VLAN ID of the downlink VLAN or because the PVID parameter classifies untagged frames as belonging to the downlink VLAN), but the port (or ports) through which the frame should be forwarded is not necessarily unambiguous: This situation is the same as for downlink traffic in the first embodiment. If the frame is a broadcast frame, it will be forwarded through all the member ports, i.e. all ports except the port 92 towards the access router 81. If the frame is a unicast frame, the switch 83 will consult its MAC address learning database in order to determine which port to forward the frame through. If the destination MAC address of the frame is not found in the MAC address learning database, the frame is flooded through all the member ports, as if it were a broadcast frame.

Between the hosts and the switch (via the AP) all frames are sent untagged. Between the switch 83 and the access router 81 the frames may be tagged or untagged. It could be beneficial to send tagged frames from the switch 83 to the access router 81, because this would implicitly provide host position information to the access router 81. This is a benefit of having one uplink VLAN per AP, since the VLAN tag in the uplink frame indicates to the access router 81 what AP the sending host is associated with and thereby implicitly indicates its rough position (provided that the position of the AP is included in configuration data). This mechanism can be used to facilitate and improve host positioning and position based services.

Just as in the first embodiment the VLAN configuration in the switch should be complemented with mechanisms preventing host-to-host communication between hosts associated with the same AP. This is achieved in the same way as in the first embodiment, which is illustrated in Figure 6. The only difference is that if the VLANs are extended to the AP, the uplink VLAN is not the access network wide common uplink VLAN (as in the first embodiment), but the uplink VLAN dedicated to the concerned AP.

Just as for the first embodiment the example in the figures has been a simple access network with only a single switch, but the principles of the solution can easily be extended to access networks with a tree structure of multiple switches. The access network would then be very similar to the access network illustrated in Figure 7. The only difference is that the VLANs are defined differently. Thus the same parts and reference numerals that were used in Figure 7 are now used for describing the tree structure with multiple uplink VLANs. The PVID assigned to traffic arriving in the second port 39 of the second switch 36 is VLAN 1, the PVID assigned to traffic arriving in the third port 40 of the second switch 36 is VLAN 2, the PVID assigned to traffic arriving in the second port 42 of the third switch 37 is VLAN 3 and the PVID assigned to traffic arriving in the third port 43 of the third switch 37 is VLAN 4. The PVID for the first ports 31, 38, 41 of the first, the second and the third switches 35, 36, 37 is VLAN 5, i.e. a common downlink VLAN, for all the APs. The PVIDs for the second and third ports 32, 33 of the first switch 35 are not significant in this case and may be undefined. The frames arriving in these ports 32, 33 already have a VLAN tag which could be VLAN 1, VLAN 2, VLAN 3 or VLAN 4. Furthermore the member sets for the first switch 3 5 are: VLAN 1: first port 31, VLAN 2: first port 31, VLAN 3: first port 31, VLAN 4: first port 31 and VLAN 5: second and third ports 32, 33. The member sets for the second switch 36 are: VLAN 1: first port 38, VLAN 2: first port 38 and VLAN 5: second and third ports 39, 40. The member sets for the third switch 37 are: VLAN 3: first port 41, VLAN 4: first port 41 and VLAN 5: second and third ports 42, 43. The untagged sets for the first switch 35 in the case where frames are sent tagged from the first switch 35 to the access router 11" are VLAN 1: -, VLAN 2: -, VLAN 3: -, VLAN 4: - and VLAN 5: either second and third ports 32, 33 or none. The untagged sets for the first switch 35 in the case where frames are sent untagged from the first switch 35 to the access router 11" are: VLAN 1: first port 31,VLAN 2: first port 31, VLAN 3: first port 31, VLAN 4: first port 31, VLAN 5: either second and third ports 32, 33 or none. The untagged sets for the second switch 36 (irrespective of whether frames are sent tagged or untagged from the first switch 35 to the access router 11") are: VLAN 1: -, VLAN 2: - and VLAN 5: second and third ports 39, 40. The untagged sets for the third switch 37 (irrespective of whether frames are sent tagged or untagged from the first switch 35 to the access router 11") are: VLAN 3: -, VLAN 4: - and VLAN 5: second and third ports 42, 43. Hereby a frame received in for example the third port 40 of the second switch 36 is tagged with the VLAN ID of VLAN 2 (as indicated by the PVID) and since the only member in VLAN 2 is the third port 38, the frame is forwarded through the first port 38 of the second switch 36 to the second port 32 of the first switch 35. When received in the second port 32 of the first switch 35 the frame is not given a new VLAN tag since it already has one. The frame still has a VLAN tag set to the VLAN ID of VLAN 2 and is therefore forwarded to the access router 11" through the first port 31 of the first switch 35. In the case where frames are to be sent untagged to the access router 11" the VLAN tag is removed from the frame before it is sent through the first port 31 1 of the first switch 35. All untagged frames transferred from the access router 11 " in the downlink direction are (as indicated by the PVID) given the VLAN tags indicating the VLAN ID of VLAN 5 and are forwarded through either the second or the third port or both.

### Isolation of Hosts connected to Fixed Access Networks

In the second embodiment for fixed access networks, each host has its own dedicated uplink VLAN, and optionally the dedicated VLAN may be used also for downlink traffic. Having a dedicated VLAN for each host is possible since there is only one host (or at least only one subscription) connected to each switch port. There is also a downlink VLAN that is common for all hosts, just like in the first embodiment. Although there may be some advantages of having a dedicated VLAN per host, this concept also has a number of disadvantages as described above. Conceptually the VLANs can be depicted as in Figure 8, where the APs are changed to hosts.

It should be noted that even though Figure 8 illustrates the VLANs as inlcuding the hosts and the access router, the hosts are assumed to be completely VLAN unaware, i.e. they handle only untagged Ethernet frames. The access router may or may not be VLAN aware. As will be explained below it may be advantageous to let it be VLAN aware. If the access router is VLAN unaware, the VLANs are completely switch internal. Still, the effective result of the switch internal VLANs are what is depicted in Figure 8. The VLANs are port-based VLANs and the classification of frames are based on the VLAN parameters defined in the switch, as described above. As in the first embodiment the VLANs have to be shared VLANs.

### The basic assumption is that the dedicated VLANs (which could be called "host

VLANs") are used only for uplink traffic and that all downlink traffic is carried in the common downlink VLAN. However, optionally, the host VLANs can be used also for downlink traffic (and in such case they would not be asymmetric VLANs anymore). If the host VLANs are used for downlink traffic, this concerns only unicast traffic. In either case all downlink broadcast packets (and probably multicast packets) are carried in the common downlink VLAN.

The parameter definitions that are needed in the switch in order to achieve the above-described asymmetric VLANs (i.e. with the host VLANs carrying only uplink traffic) are the same as described in relation to Figure 9. The only difference is that the APs are changed to hosts.

As can be seen from the parameter definitions described in relation to Figure 9 for a fixed network, an uplink frame (unicast or broadcast) that is sent from a host and received by the switch 83 can exit the switch 83 only through the port 92 towards the access router 81. This is very similar to the second embodiment for WLAN access networks.

A frame arriving from the access router 81 is automatically classified as belonging to the downlink VLAN (either because it is tagged with the VLAN ID of the downlink VLAN or because the PVID parameter classifies untagged frames as belonging to the downlink VLAN). If the frame is a broadcast frame, it will be forwarded through all ports (except the one where it arrived i.e. the port 92 towards the access router 81) and if the frame is a unicast frame, the port or ports to forward it through is determined by the MAC address learning database of the switch.

Between the hosts and the switch all frames are sent untagged. Between the switch 83 and the access router 81 the frames may be tagged or untagged. It could be beneficial to send tagged frames from the switch to the access router, because then the VLAN tags could be used as an identification of the sending user (or rather an identification of the subscription responsible for sending the frame). If no other form of source identification is used, like e.g. cryptographic message authentication, this may be a benefit of using one uplink VLAN per host. The source IP address and the source MAC address can both be forged, but the VLAN tag can not be forged by the user, since it is set by the switch, beyond the control of the user.

As mentioned above the host VLANs can optionally be used also for downlink unicast traffic. This requires that the access router keep track of which VLAN. that is dedicated to each connected host (and this is facilitated if the frames sent from the switch to the access router are tagged). The parameter definitions in Figure 9 for fixed access networks do not support this scenario. The parameter definitions that are needed in the switch in order to achieve this optional VLAN configuration (i.e. with the host VLANs carrying unicast downlink traffic and all uplink traffic) is different in that the member sets for VLAN 1 must be both first and second ports 92, 96 and for VLAN 2 both first and third ports 92, 97. With these parameter definitions unicast downlink traffic can be sent also on the uplink VLANs, i.e. VLAN 1 and VLAN 2.

When the access router sends a unicast frame to a host through a dedicated VLAN, the frame has to be tagged with the correct VLAN ID. In this scenario the common downlink VLAN is used only for broadcast (and probably multicast) frames. When the PVID parameter of the port towards the access router is set to the VLAN ID of the common downlink VLAN, the broadcast frames sent from the access router through the common downlink VLAN can be either tagged or untagged. Thus with this optional configuration unicast frames sent from the access router to the hosts have to be tagged, while the broadcast frames may be either tagged or untagged.

An advantage of using the host VLANs for downlink unicast traffic is that with this configuration a unicast frame is bound to reach only the host that it is destined for. When a unicast frame is sent through the common downlink VLAN, it will sometimes (although rarely) be flooded through all the switch ports (except the port towards the access router) and will consequently reach all hosts connected to the switch. This will happen when the destination MAC address is not found in the MAC address learning database, which typically has a timeout of five minutes for its entries. However, in a client server scenario, with the host typically being the client, this will happen very rarely, since the frames sent to a host will come as a response to frames sent from the host. Consequently the MAC address learning database will have a fresh entry with the MAC address of the concerned host.

A disadvantage of using the host VLANs for downlink unicast traffic is that the forwarding in the access router gets more complicated. It is no longer enough to just forward an IP packet into the access network, instead the access router has to look up the correct host VLAN through which to send the IP packet and include the correct VLAN tag into the frame encapsulating the IP packet.

Also in this case the principles of the solution can easily be extended to access networks with a tree structure of multiple switches. A figure illustrating this solution would be very similar to Figure 7, which illustrates a multi-switch WLAN access network for the second embodiment. To make it illustrate a fixed access network with one uplink VLAN (carrying only uplink traffic) per host the APs should be changed to hosts and the VLAN parameters should be defined as indicated above when figure 7 is described in conjunction with a multi-switch WLAN access network for the second embodiment. To make it illustrate a fixed access network with one uplink VLAN per host where the uplink VLANs are used also for downlink unicast traffic, the VLAN parameters should be further changed as follows. The member sets in the first switch 35: VLAN 1: first and second ports 31, 32, VLAN 2: first and second ports 31, 32, VLAN 3: first and third ports 31, 33, VLAN 4: first and third ports 31, 33 and VLAN 5: second and third ports 32, 33. The member sets in the second switch 36: VLAN 1: first and second ports 38, 39, VLAN 2: first and third ports 38, 40 and VLAN 5: second and third ports 39, 40. The member sets in the third switch 37: VLAN 3: first and second ports41, 42, VLAN 4: first and third ports 41, 43 and VLAN 5: second and third ports 42, 43. The untagged sets should be the same as when figure 7 is described in conjunction with a multi-switch WLAN access network for the second embodiment and the frames are sent tagged from the first switch 35 to the access router 11".

### Enabling Controlled Host-to-Host Communication

Like in the first embodiment the access router enables controlled intra-access network host-to-host communication by acting as a modified ARP proxy agent and by performing intra-subnet routing.

As an ARP proxy agent the access router responds to all ARP requests concerning hosts on its subnet (i.e. the subnet of the access network). In the ARP reply the access router includes its own MAC address in the 'sender hardware address' field instead of the MAC address of the target host.

Like in the first embodiment, the access router has to know two things to make this behaviour possible: it has to know that the target host is actually present on the subnet and it has to know (or at least be able to find out) the MAC address of the target host in order to be able to forward subsequent IP packets to the target host. In the case where the dedicated host VLANs are used also for downlink unicast traffic (i.e. an option only for fixed access networks), the access router also has to know to which host VLAN a connected host belongs.

The ways to know whether a certain host is present on the subnet or not and the methods used to retrieve the address mapping information are the same as in the first embodiment.

If the access router also needs to know the dedicated VLAN of a host, this is preferably recorded when the access router detects that the host is present on the subnet, e.g. during a user authentication procedure or when the concerned host sends an ARP reply in response to an ARP request from the access router. In this process the access router extracts the VLAN tag of a frame received from the concerned host and this VLAN tag represents the identity of the VLAN dedicated for the host. This VLAN information is then stored in the access router to be used when unicast frames are to be sent to the concerned host, either frames containing data with the access router as the source or frames containing IP packets that are forwarded by the access router.

Some merits of the second embodiment:
- The access network can be a single IP subnet, due to the use of intra-subnet routing. This saves IP addresses and simplifies configuration of IP addresses and subnet masks.
- The broadcast replication problem in the access router is eliminated, since a single broadcast message from the access router will reach all hosts connected to the access network through the common downlink VLAN.
- The access router can be VLAN unaware (but not if the downlink unicast traffic is to be sent through the dedicated host VLANs in a fixed access network).
- The host-to-host intra-access network communication is solved in an efficient way with less overhead (in most cases) than in regular RFC 925 proxy ARP, since repeated/relayed ARP requests can be avoided in contrast to the case of regular RFC 925 proxy ARP.
- The access router does not have to send ARP requests to find out the MAC addresses of the hosts connected to its access network (except in fixed access networks that do not keep track of what hosts that are currently connected). This saves bandwidth and reduces the delay for some packets.
- The solution is applicable to both fixed access networks and WLAN access networks. (However, the principle of the solution is somewhat different in the two cases. In a fixed access network a dedicated uplink VLAN for each host is used, while in a WLAN access network there is a dedicated uplink VLAN for each AP.)
- The uplink VLANs that are dedicated to the APs in a WLAN access network provide the access router with implicit position information (through the VLAN tag) about the sending host (provided that the access router is VLAN aware).
- A VLAN aware access router in a fixed access network can use the VLAN tag of a received frame as an identification of the subscriber responsible for sending the frame.
- If the dedicated host VLANs are used also for downlink unicast traffic in a fixed access network, it is ensured that a downlink unicast frame reaches only its intended destination host. Otherwise, if a common downlink VLAN is used for unicast frames, the MAC address learning database(s) of the switch(es) in the access network determines which host(s) the frame will be forwarded to. In this case it may happen that a unicast frame is flooded to a large number of hosts (even all) that are connected to the access network.

The invention has been described in the context of a typical access network with only one access router. However, an access network may have more than one access router, e.g. for load sharing or redundancy purposes. The present invention is equally applicable in an access network with multiple access routers.

In an access network with multiple access routers the previously described VLAN configurations are extended so that all the access routers always are included in the same VLANs. That is, if one switch port to which an access router is connected is included in the member set of a certain VLAN in a switch, then all other switch ports to which access routers are connected in the same switch are also included in the member set of the same VLAN. The same PVID should also be defined for all switch ports to which access routers are connected. However, the use of tagged or untagged frames between a switch and an access router is independent of whether the communication between the switch and other access routers uses tagged or untagged frames.

A result of the above-described VLAN configuration is that, unless restricted by the MAC address learning databases(s) of the switch(es), all uplink traffic will reach all access routers. The access routers decide among themselves (as configured by the operator of the access routers) which one that is responsible for handling certain parts of the traffic. This could be based on e.g. load balancing principles or the source or destination address of a concerned packet.

Furthermore, there may be more VLANs configured in an access network than the VLANs described in conjunction with the present invention, e.g. for operation and maintenance purposes. This does not affect the applicability of the invention.

In the given examples the expression "hosts connected to the access network" should not be interpreted as necessarily all the hosts connected to the access network. It is of course possible that some hosts connected to the access network are not a part of the described VLAN structures.

Furthermore in the second described embodiment where each host has its own uplink VLAN it would also be possible to define groups of hosts and then define one uplink VLAN for each group of hosts.

## Claims

1. A method in an access network for preventing hosts (5; A, B) connected to the access network from communicating directly with each other, said access network comprising an access router (1; 11; 11'; 11"; 81) and one or more switches (3; 12; 12'; 35, 36, 37; 83) comprising ports, wherein said hosts being in communication contact with said access router via said switches, said method comprising the steps of:
- defining uplink Virtual Local Area Networks, VLANs, in the switches such that traffic arriving into the switches from said hosts is forced to the access router, by defining VLAN identifying parameters in the ports of the switches, and
- defining in the switches one downlink VLAN being asymmetric and carrying downlink traffic from the access router to said hosts, by defining a VLAN identifying parameter in the ports of the switches, said downlink VLAN being common to said hosts connected to the access network,
**characterised by** the further steps of:
- configuring the uplink and downlink VLANs such that said hosts connected to the access network belong to the same IP subnet, and
- configuring the access router to be an Address Resolution Protocol proxy and to perform intra-subnet routing.

2. A method according to claim 1, wherein said hosts comprise all hosts connected to said access network.

3. A method according to claim 1 or 2, **characterised by** defining in the switches (3; 12; 12'; 35,36,37) one uplink VLAN being asymmetric and carrying uplink traffic from said hosts (5; A, B) to the access router (1; 11; 11'; 11''), said uplink VLAN being common to said hosts connected to the access network.

4. A method according to claim 1 or 2, **characterised by** defining in the switches (83) in a fixed access network one uplink VLAN for each of said hosts or for each of one or more groups of said hosts, said uplink VLANs being used for only uplink traffic from said hosts to the access router (81).

5. A method according to claim 1 or 2, **characterised by** defining in the switches (83) in a fixed access network one uplink VLAN for each of said hosts or for each of one or more groups of said hosts, said uplink VLANs being used for uplink traffic from said hosts to the access router (81) and further defining said uplink VLANs to also transfer downlink unicast traffic from the access router to the hosts.

6. A method according to claim 1 or 2, **characterised by** defining in the switches (83) in a WLAN access network one uplink VLAN for each Access Point, AP, (85, 86) or for each of one or more groups of APs, said uplink VLANs being used for uplink traffic from the APs and the hosts connected to the APs to the access router (81).

7. A method according to claim 3 or 6, **characterised by** configuring Access Points, APs, (14) in a WLAN to prevent hosts (A, B) connected to the same AP (14) from communicating directly with each other through the AP by extending the downlink VLAN and the uplink VLAN to incorporate the AP or by utilising the inherent configuration abilities of the AP.

8. A method according to anyone of the claims 4-7, **characterised by** providing in the switches (83) the frames sent from the hosts (A, B) to the access router (81) with VLAN tags and configuring the access router (81) to be VLAN aware.

9. A method according to anyone of the preceding claims, **characterised by** configuring the VLANs as shared VLANs.

10. A method according to anyone of the preceding claims, **characterised by** retrieving by the access router (1; 11; 11'; 11"; 81) address mapping information for the hosts (5; A, B) during the user authentication procedure.

11. A method according to anyone of the preceding claims, **characterised by** retrieving by the access router (1; 11; 11'; 11"; 81) address mapping infonnation for the hosts (5; A, B) during the IP allocation procedure.

12. A method according to anyone of the preceding claims, **characterised by** providing more than one access router in the access network, the VLANs being configured such that the access routers belong to the same VLANs.

13. An arrangement in an access network, said arrangement comprising an access router (1; 11; 11'; 11"; 81), one or more switches (3; 12; 12'; 35, 36, 37; 83) comprising ports, and connected to the access router and one or more hosts (5; A, B) being in communication contact with said access router through said switches, wherein said arrangement is adapted to prevent said hosts from communicating directly with each other, said switches being configured to define uplink Virtual Local Area Networks, uplink VLANs, by VLAN identifying parameters defined in the ports of the switches,such that traffic arriving into the switches from said hosts is forced to proceed to said access router, the switches further being configured by the VLAN identifying parameters,to define one downlink VLAN being asymmetric and carrying downlink traffic from the access router to said hosts, said downlink VLAN being common to said hosts connected to the access network **characterized in that** the uplink and downlink VLANs are configured such that said hosts belong to the same IP subnet and **in that** the access router is configured to be an Address Resolution Protocol proxy and to perform intra-subnet routing.

14. An arrangement according to claim 13, **characterised in that** said hosts comprise all hosts connected to the access network.

15. An arrangement according to claim 13 or 14, **characterised in that** the switches (3; 12; 12'; 35, 36, 37) are configured to define one uplink VLAN being asymmetric and carrying uplink traffic from the hosts (5; A, B) to the access router (1; 11; 11'; 11''), said uplink VLAN being common to said hosts.

16. An arrangement according to claim 13 or 14, **characterised in that** the switches (83) in a fixed access network are configured to define one uplink VLAN for each of said hosts or for each of one or more groups of said hosts, said uplink VLANs being asymmetric and used for uplink traffic from said hosts (5; A, B) to the access router (81).

17. An arrangement according to claim 13 or 14, **characterised in that** the switches (83) in a fixed access network are configured to define one uplink VLAN for each of said hosts or for each of one or more groups of said hosts, said uplink VLANs being used for uplink traffic from said hosts to the access router (81) and for downlink unicast traffic from the access router to the hosts.

18. An arrangement according to claim 13 or 14, **characterised in that** the switches (83) in a WLAN access network are configured to define one uplink VLAN for each Access Point, AP, (85, 86) or for each of one or more groups of APs, said uplink VLANs being used for uplink traffic from the APs to the access router (81).

19. An arrangement according to anyone of the claims 16-18, **characterised in that** the access router (81) is configured to be VLAN aware and **in that** the switches (83) are adapted to provide the frames sent from the hosts (A, B) to the access router (81) with VLAN tags.

20. An arrangement according to anyone of the claims 13-19, **characterised in that** the (3; 12; 12'; 35, 36, 37; 83) are adapted to configure the VLANs as shared VLANs.

21. An arrangement according to anyone of the claims 13-20, **characterised in that** the access router (1; 11; 11'; 11"; 81) is adapted to retrieve address mapping information for the hosts (5; A, B) during the user authentication procedure.

22. An arrangement according to anyone of the claims 13-21, **characterised in that** the access router (1; 11; 11'; 11"; 81) is adapted to retrieve address mapping information for the hosts (5; A, B) during the IP allocation procedure.

23. An arrangement according to anyone of the claims 13-22, **characterised in that** more than one access router are provided in the system, the VLANs being configured in the switches such that the access routers belong to the same VLANs.

## Patentansprüche

1. Verfahren in einem Zugangsnetz zum Verhindern, dass Hosts (5; A, B), die mit dem Zugangsnetz verbunden sind, direkt miteinander kommunizieren, das Zugangsnetz umfassend einen Zugangsrouter (1; 11; 11'; 11 "; 81) und eine oder mehr Vermittlungseinrichtungen (3; 12; 12'; 35, 36, 37; 83), die Anschlüsse umfassen, wobei die Hosts in Kommunikationskontakt mit dem Zugangsrouter über die Vermittlungseinrichtungen stehen, das Verfahren die folgenden Schritte umfassend:
- Definieren von aufwärtsgerichteten virtuellen lokalen Bereichsnetzen, VLANs, in den Vermittlungseinrichtungen derart, dass Verkehr, der von den Hosts in den Vermittlungseinrichtungen eintrifft, zwangsweise zu dem Zugangsrouter geleitet wird, indem VLAN identifizierende Parameter in den Anschlüssen der Vermittlungseinrichtungen definiert werden, und
- Definieren eines abwärtsgerichteten VLAN in den Vermittlungseinrichtungen, das asymmetrisch ist und abwärtsgerichteten Verkehr von dem Zugangsrouter zu den Hosts trägt, indem ein VLAN identifizierender Parameter in den Anschlüssen der Vermittlungseinrichtungen definiert wird, wobei das abwärtsgerichtete VLAN gemeinsam für die Hosts ist, die mit dem Zugangsnetz verbunden sind,
**gekennzeichnet durch** die folgenden weiteren Schritte:
- Konfigurieren der aufwärtsgerichteten und abwärtsgerichteten VLANs derart, dass Hosts, die mit dem Zugangsnetz verbunden sind, zu demselben IP-Teilnetz gehören, und
- Konfigurieren des Zugangsrouters, um ein Adressauflösungsprotokoll-Proxy zu sein und um Intra-Teilnetz-Leitweglenkung durchzuführen.

2. Verfahren nach Anspruch 1, wobei die Hosts alle Hosts umfassen, die mit dem Zugangsnetz verbunden sind.

3. Verfahren nach Anspruch 1 oder 2, **gekennzeichnet durch** Definieren, in den Vermittlungseinrichtungen (3; 12; 12'; 35, 36, 37), eines aufwärtsgerichteten VLAN, um asymmetrisch zu sein und aufwärtsgerichteten Verkehr von den Hosts (5; A, B) zu dem Zugangsrouter (1; 11; 11'; 11") zu tragen, wobei das aufwärtsgerichtete VLAN für die Hosts, die mit dem Zugangsnetz verbunden sind, gemeinsam ist.

4. Verfahren nach Anspruch 1 oder 2, **gekennzeichnet durch** Definieren, in den Vermittlungseinrichtungen (83), eines aufwärtsgerichteten VLAN für jeden der Hosts oder für jeden von einer oder mehr Gruppen der Hosts in einem festen Zugangsnetz, wobei die aufwärtsgerichteten VLANs nur für aufwärtsgerichteten Verkehr von den Hosts zu dem Zugangsrouter (81) genutzt werden.

5. Verfahren nach Anspruch 1 oder 2, **gekennzeichnet durch** Definieren, in den Vermittlungseinrichtungen (83), eines aufwärtsgerichteten VLAN für jeden der Hosts oder für jeden von einer oder mehr Gruppen der Hosts in einem festen Zugangsnetz, wobei die aufwärtsgerichteten VLANs für aufwärtsgerichteten Verkehr von den Hosts zu dem Zugangsrouter (81) genutzt werden, und weiter Definieren der aufwärtsgerichteten VLANs, um außerdem abwärtsgerichteten Unicast-Verkehr von dem Zugangsrouter zu den Hosts zu übertragen.

6. Verfahren nach Anspruch 1 oder 2, **gekennzeichnet durch** Definieren, in den Vermittlungseinrichtungen (83) in einem WLAN-Zugangsnetz, eines aufwärtsgerichteten VLAN für jeden Zugangspunkt, AP, (85, 86) oder für jede von einer oder mehr Gruppen von APs, wobei die aufwärtsgerichteten VLANs für aufwärtsgerichteten Verkehr von den APs und den Hosts, die mit den APs verbunden sind, zu dem Zugangsrouter (81) genutzt werden.

7. Verfahren nach Anspruch 3 oder 6, **gekennzeichnet durch** Konfigurieren von Zugangspunkten, APs, (14) in einem WLAN, um zu verhindern, dass Hosts (A, B), die mit demselben AP (14) verbunden sind, direkt miteinander **durch** den AP kommunizieren, indem das abwärtsgerichtete VLAN und das aufwärtsgerichtete VLAN erweitert werden, um den AP zu inkorporieren, oder **durch** Nutzung der innewohnenden Konfigurationsfähigkeiten des AP.

8. Verfahren nach einem der Ansprüche 4 - 7, **gekennzeichnet durch** Versehen, in den Vermittlungseinrichtungen (83), der Rahmen, die von den Hosts (A, B) zu dem Zugangsrouter (81) gesandt wurden, mit VLAN-Markierungen und Konfigurieren des Zugangsrouters (81), um VLAN-bewusst zu sein.

9. Verfahren nach einem der vorstehenden Ansprüche, **gekennzeichnet durch** Konfigurieren der VLANs als gemeinsame VLANs.

10. Verfahren nach einem der vorstehenden Ansprüche, **gekennzeichnet durch** Abrufen, **durch** den Zugangsrouter (1; 11; 11'; 11"; 81), von Adressabbildungsinformationen für die Hosts (5; A, B) während der Benutzerauthentifizierungsprozedur.

11. Verfahren nach einem der vorstehenden Ansprüche, **gekennzeichnet durch** Abrufen, **durch** den Zugangsrouter (1; 11; 11'; '; 11"; 81), von Adressabbildungsinformationen für die Hosts (5; A, B) während der IP-Zuweisungsprozedur.

12. Verfahren nach einem der vorstehenden Ansprüche, **gekennzeichnet durch** Bereitstellen von mehr als einem Zugangsrouter in dem Zugangsnetz, wobei die VLANs derart konfiguriert werden, dass die Zugangsrouter zu denselben VLANs gehören.

13. Anordnung in einem Zugangsnetz, die Anordnung umfassend einen Zugangsrouter (1; 11; 11'; 11"; 81), eine oder mehr Vermittlungseinrichtungen (3; 12; 12'; 35, 36, 37; 83), die Anschlüsse umfassen und mit dem Zugangsrouter und einem oder mehr Hosts (5; A, B), die in Kommunikationskontakt durch die Vermittlungseinrichtungen mit dem Zugangsrouter stehen, verbunden sind, wobei die Anordnung angepasst ist, um zu verhindern, dass die Hosts direkt miteinander kommunizieren, wobei die Vermittlungseinrichtungen konfiguriert sind, um aufwärtsgerichtete virtuelle lokale Bereichsnetze, aufwärtsgerichtete VLANs, durch VLAN identifizierende Parameter, die in den Anschlüssen der Vermittlungseinrichtungen definiert sind, zu definieren, so dass Verkehr, der von den Hosts in den Vermittlungseinrichtungen eintrifft, gezwungen wird, zu dem Zugangsrouter zu verlaufen, wobei die Vermittlungseinrichtungen durch die VLAN identifizierenden Parameter weiterhin konfiguriert werden, um ein abwärtsgerichtetes VLAN zu definieren, um asymmetrisch zu sein und abwärtsgerichteten Verkehr von dem Zugangsrouter zu den Hosts zu tragen, wobei das abwärtsgerichtete VLAN gemeinsam für die Hosts ist, die mit dem Zugangsnetz verbunden sind, **dadurch gekennzeichnet, dass** die aufwärtsgerichteten und abwärtsgerichteten VLANs derart konfiguriert sind, dass die Hosts zu demselben IP-Teilnetz gehören, und **dadurch**, dass der Zugangsrouter konfiguriert ist, um ein Adressauflösungsprotokoll-Proxy zu sein und um Intra-Teilnetz-Leitweglenkung durchzuführen.

14. Anordnung nach Anspruch 13, **dadurch gekennzeichnet, dass** die Hosts alle Hosts umfassen, die mit dem Zugangsnetz verbunden sind.

15. Anordnung nach Anspruch 13 oder 14, **dadurch gekennzeichnet, dass** die Vermittlungseinrichtungen (3; 12; 12'; 35, 36, 37) konfiguriert sind, um einen aufwärtsgerichteten VLAN zu definieren, um asymmetrisch zu sein und aufwärtsgerichteten Verkehr von den Hosts (5; A, B) zu dem Zugangsrouter (1; 11; 11'; 11 ") zu tragen, wobei das aufwärtsgerichtete VLAN für die Hosts gemeinsam ist.

16. Anordnung nach Anspruch 13 oder 14, **dadurch gekennzeichnet, dass** die Vermittlungseinrichtungen (83) in einem festen Zugangsnetz konfiguriert sind, um ein aufwärtsgerichtetes VLAN für jeden der Hosts oder für jeden von einer oder mehr Gruppen der Host zu definieren, wobei die aufwärtsgerichteten VLANs asymmetrisch sind und für aufwärtsgerichteten Verkehr von den Hosts (5; A, B) zu dem Zugangsrouter (81) genutzt werden.

17. Anordnung nach Anspruch 13 oder 14, **dadurch gekennzeichnet, dass** die Vermittlungseinrichtungen (83) in einem festen Zugangsnetz konfiguriert sind, um ein aufwärtsgerichtetes VLAN für jeden der Hosts oder für jeden von einer oder mehr Gruppen der Host zu definieren, wobei die aufwärtsgerichteten VLANs für aufwärtsgerichteten Verkehr von den Hosts zu dem Zugangsrouter (81) und für abwärtsgerichteten Unicast-Verkehr von dem Zugangsrouter zu den Hosts genutzt werden.

18. Anordnung nach Anspruch 13 oder 14, **dadurch gekennzeichnet, dass** die Vermittlungseinrichtungen (83) in einem WLAN-Zugangsnetz konfiguriert sind, um ein aufwärtsgerichtetes VLAN für jeden Zugangspunkt, AP, (85, 86) oder für jede von einer oder mehr Gruppen von APs zu definieren, wobei die aufwärtsgerichteten VLANs für aufwärtsgerichteten Verkehr von den APs zu dem Zugangsrouter (81) genutzt werden.

19. Anordnung nach einem der Ansprüche 16 - 18, **dadurch gekennzeichnet, dass** der Zugangsrouter (81) konfiguriert ist, um VLAN-bewusst zu sein, und **dadurch**, dass die Vermittlungseinrichtungen (83) angepasst sind, um die Rahmen, die von den Hosts (A, B) zu dem Zugangsrouter (81) gesendet werden, mit VLAN-Markierungen zu versehen.

20. Anordnung nach einem der Ansprüche 13 - 19, **dadurch gekennzeichnet, dass** die Vermittlungseinrichtungen (3; 12; 12'; 35, 36, 37; 83) angepasst sind, um die VLANs als gemeinsame VLANs zu konfigurieren.

21. Anordnung nach einem der Ansprüche 13 - 20, **dadurch gekennzeichnet, dass** der Zugangsrouter (1; 11; 11'; 11 "; 81) angepasst ist, um Adressabbildungsinformationen für die Hosts (5; A, B) während der Benutzerauthentifizierungsprozedur abzurufen.

22. Anordnung nach einem der Ansprüche 13-21, **dadurch gekennzeichnet, dass** der Zugangsrouter (1; 11; 11'; 11 "; 81) angepasst ist, um Adressabbildungsinformationen für die Hosts (5; A, B) während der IP-Zuweisungsprozedur abzurufen.

23. Anordnung nach einem der Ansprüche 13 - 22, **dadurch gekennzeichnet, dass** mehr als ein Zugangsrouter in dem System bereitgestellt wird, wobei die VLANs in den Vermittlungseinrichtungen derart konfiguriert werden, dass die Zugangsrouter zu denselben VLANs gehören.

## Revendications

1. Procédé, dans un réseau d'accès, pour empêcher des hôtes (5; A, B) connectés au réseau d'accès de communiquer directement les uns avec les autres, ledit réseau d'accès comportant un routeur d'accès (1; 11; 11' 11"; 81) et un ou plusieurs commutateurs (3; 12; 12'; 35, 36, 37; 83) comportant des ports, dans lesquels lesdits hôtes sont en communication avec ledit routeur d'accès via lesdits commutateurs, ledit procédé comportant les étapes ci-dessous consistant à:
- définir des réseaux locaux virtuels en liaison montante, VLAN, dans les commutateurs, de sorte que le trafic arrivant dans les commutateurs en provenance desdits hôtes est forcé vers le routeur d'accès, en définissant des paramètres d'identification de réseau VLAN dans les ports des commutateurs; et
- définir, dans les commutateurs, un réseau VLAN en liaison descendante qui est asymétrique et transporte du trafic en liaison descendante, du routeur d'accès auxdits hôtes, en définissant un paramètre d'identification de réseau VLAN dans les ports des commutateurs, ledit réseau VLAN en liaison descendante étant commun auxdits hôtes connectés au réseau d' accès;
**caractérisé en outre par** les étapes ci-dessous consistant à:
- configurer les réseaux VLAN en liaison descendante et en liaison montante de sorte que lesdits hôtes connectés au réseau d'accès appartiennent au même sous-réseau IP; et
- configurer le routeur d'accès en qualité de serveur mandataire de protocole de résolution d'adresse et pour qu'il mette en oeuvre un routage entre sous-réseaux.

2. Procédé selon la revendication 1, dans lequel lesdits hôtes comprennent tous les hôtes qui sont connectés audit réseau d'accès.

3. Procédé selon la revendication 1 ou 2, **caractérisé par** l'étape consistant à définir, dans les commutateurs (3; 12; 12'; 35, 36, 37) un réseau VLAN en liaison montante qui est asymétrique et transporte le trafic en liaison montante desdits hôtes (5; A, B) au routeur d'accès (1; 11; 11'; 11"), ledit réseau VLAN en liaison montante étant commun auxdits hôtes connectés au réseau d'accès.

4. Procédé selon la revendication 1 ou 2, **caractérisé par** l'étape consistant à définir, dans les commutateurs (83), dans un réseau d'accès fixe, un réseau VLAN en liaison montante pour chacun desdits hôtes ou pour chacun d'un ou plusieurs groupes desdits hôtes, lesdits réseaux VLAN en liaison montante étant uniquement utilisés pour le trafic en liaison montante desdits hôtes au routeur d'accès (81).

5. Procédé selon la revendication 1 ou 2, **caractérisé par** l'étape consistant à définir, dans les commutateurs (83), dans un réseau d'accès fixe, un réseau VLAN en liaison montante pour chacun desdits hôtes ou pour chacun d'un ou plusieurs groupes desdits hôtes, lesdits réseaux VLAN en liaison montante étant utilisés pour le trafic en liaison montante desdits hôtes au routeur d'accès (81) et en outre par l'étape consistant à définir lesdits réseaux VLAN en liaison montante afin qu'ils transfèrent également le trafic d'envoi individuel en liaison descendante du routeur d'accès aux hôtes.

6. Procédé selon la revendication 1 ou 2, **caractérisé par** l'étape consistant à définir, dans les commutateurs (83), dans un réseau d'accès WLAN, un réseau VLAN en liaison montante pour chaque point d'accès, AP, (85, 86) ou pour chacun d'un ou plusieurs groupes de points AP, lesdits réseaux VLAN en liaison montante étant utilisés pour le trafic en liaison montante des points AP, et des hôtes connectés aux points AP, au routeur d'accès (81).

7. Procédé selon la revendication 3 ou 6, **caractérisé par** l'étape consistant à configurer les points d'accès, AP, (14) dans un réseau WLAN, pour empêcher les hôtes (A, B) connectés au même point AP (14) de communiquer directement les uns avec les autres via le point AP, en étendant le réseau VLAN en liaison descendante et le réseau VLAN en liaison montante afin d'intégrer le point AP, ou en utilisant les fonctionnalités de configuration inhérentes du point AP.

8. Procédé selon l'une quelconque des revendications 4 à 7, **caractérisé par** l'étape consistant à délivrer, dans les commutateurs (83), les trames envoyées des hôtes (A, B) au routeur d'accès (81), avec des balises de réseau VLAN, et l'étape consistant à configurer le routeur d'accès (81) afin qu'il soit compatible avec les réseaux VLAN.

9. Procédé selon l'une quelconque des revendications précédentes, **caractérisé par** l'étape consistant à configurer les réseaux VLAN sous la forme de réseaux VLAN partagés.

10. Procédé selon l'une quelconque des revendications précédentes, **caractérisé par** l'étape consistant à récupérer, par le biais du routeur d'accès (1; 11; 11'; 11"; 81), des informations de mise en concordance d'adresses des hôtes (5; A, B) au cours de la procédure d'authentification d'utilisateur.

11. Procédé selon l'une quelconque des revendications précédentes, **caractérisé par** l'étape consistant à récupérer, par le biais du routeur d'accès (1; 11; 11'; 11"; 81), des informations de mise en concordance d'adresses des hôtes (5; A, B) au cours de la procédure d'affectation de protocole IP.

12. Procédé selon l'une quelconque des revendications précédentes, **caractérisé par** l'étape consistant à délivrer plus d'un routeur d'accès dans le réseau d'accès, les réseaux VLAN étant configurés de sorte que les routeurs d'accès appartiennent aux mêmes réseaux VLAN.

13. Agencement dans un réseau d'accès, ledit agencement comportant un routeur d'accès (1; 11; 11'; 11"; 81), un ou plusieurs commutateurs (3; 12; 12'; 35, 36, 37; 83) comportant des ports, et connectés au routeur d'accès, et un ou plusieurs hôtes (5; A, B) en communication avec ledit routeur d'accès via lesdits commutateurs, dans lequel ledit agencement est apte à empêcher lesdits hôtes de communiquer directement les uns avec les autres, lesdits commutateurs étant configurés de manière à définir des réseaux locaux virtuels en liaison montante, VLAN en liaison montante, par le biais des paramètres d'identification de réseau VLAN définis dans les ports des commutateurs, de sorte que le trafic arrivant dans les commutateurs en provenance desdits hôtes est forcé à transiter vers ledit routeur d'accès, les commutateurs étant en outre configurés par les paramètres d'identification de réseau VLAN de manière à définir un réseau VLAN en liaison descendante qui soit asymétrique et qui transporte du trafic en liaison descendante du routeur d'accès auxdits hôtes, ledit réseau VLAN en liaison descendante étant commun auxdits hôtes connectés au réseau d'accès, **caractérisé en ce que** les réseaux VLAN en liaison descendante et en liaison montante sont configurés de sorte que lesdits hôtes appartiennent au même sous-réseau IP et **en ce que** le routeur d'accès est configuré en qualité de serveur mandataire de protocole de résolution d'adresse et pour mettre en oeuvre un routage entre les sous-réseaux.

14. Agencement selon la revendication 13, **caractérisé en ce que** lesdits hôtes comprennent tous les hôtes qui sont connectés au réseau d'accès.

15. Agencement selon la revendication 13 ou 14, **caractérisé en ce que** les commutateurs (3; 12; 12'; 35, 36, 37) sont configurés de manière à définir un réseau VLAN en liaison montante qui est asymétrique et transporte du trafic en liaison montante des hôtes (5; A, B) au routeur d'accès (1; 11; 11'; 11"), ledit réseau VLAN en liaison montante étant commun auxdits hôtes.

16. Agencement selon la revendication 13 ou 14, **caractérisé en ce que** les commutateurs (83) dans un réseau d'accès fixe sont configurés de manière à définir un réseau VLAN en liaison montante pour chacun desdits hôtes ou pour chacun d'un ou plusieurs groupes desdits hôtes, lesdits réseaux VLAN en liaison montante étant asymétriques et utilisés pour le trafic en liaison montante desdits hôtes (5; A, B) au routeur d'accès (81).

17. Agencement selon la revendication 13 ou 14, **caractérisé en ce que** les commutateurs (83) dans un réseau d'accès fixe sont configurés de manière à définir un réseau VLAN en liaison montante pour chacun desdits hôtes ou pour chacun d'un ou plusieurs groupes desdits hôtes, lesdits réseaux VLAN en liaison montante étant utilisés pour le trafic en liaison montante desdits hôtes au routeur d'accès (81) et pour le trafic d'envoi individuel en liaison descendante du routeur d'accès aux hôtes.

18. Agencement selon la revendication 13 ou 14, **caractérisé en ce que** les commutateurs (83) dans un réseau d'accès WLAN sont configurés de manière à définir un réseau VLAN en liaison montante pour chaque point d'accès, AP, (85, 86) ou pour chacun d'un ou plusieurs groupes de points AP, lesdits réseaux VLAN en liaison montante étant utilisés pour le trafic en liaison montante des points AP au routeur d'accès (81 ).

19. Agencement selon l'une quelconque des revendications 16 à 18, **caractérisé en ce que** le routeur d'accès (81) est configuré de manière à être compatible avec les réseaux VLAN et **en ce que** les commutateurs (83) sont aptes à délivrer les trames envoyées des hôtes (A, B) au routeur d'accès (81) avec des balises de réseau VLAN.

20. Agencement selon l'une quelconque des revendications 13 à 19, **caractérisé en ce que** les commutateurs (3; 12; 12'; 35, 36, 37; 83) sont aptes à configurer les réseaux VLAN en tant que réseaux VLAN partagés.

21. Agencement selon l'une quelconque des revendications 13 à 20, **caractérisé en ce que** le routeur d'accès (1; 11; 11'; 11"; 81) est apte à récupérer des informations de mise en concordance d'adresses des hôtes (5; A, B) au cours de la procédure d'authentification d'utilisateur.

22. Agencement selon l'une quelconque des revendications 13 à 21, **caractérisé en ce que** le routeur d'accès (1; 11; 11'; 11"; 81) est apte à récupérer des informations de mise en concordance d'adresses des hôtes (5; A, B) au cours de la procédure d'affectation de protocole IP.

23. Agencement selon l'une quelconque des revendications 13 à 22, **caractérisé en ce que** plus d'un routeur d'accès est délivré dans le système, les réseaux VLAN étant configurés dans les commutateurs de sorte que les routeurs d'accès appartiennent aux mêmes réseaux VLAN.
